# EUROPÄISCHE PATENTANMELDUNG

(11) **EP 4 360 800 A1**
(43) Veröffentlichungstag der Anmeldung: **01.05.2024**
(21) Anmeldenummer: 22204244.2
(22) Anmeldetag: 27.10.2022
(51) Int. Cl.: B23P 15/00, B32B 7/12, B32B 37/12, B32B 37/18, H01F 3/02, H01F 41/02

(54) **VERFAHREN ZUM VERBINDEN VON BLECHTEILEN ZU ZUMINDEST EINEM BLECHPAKET**

(71) Anmelder: voestalpine Automotive Components Dettingen GmbH & Co. KG, 72581 Dettingen an der Erms (DE)
(72) Erfinder: Bursy, Heinrich, 73268 Erkenbrechtsweiler (DE)
(74) Vertreter: Jell, Friedrich

(57) **Zusammenfassung**

Es wird ein Verfahren zum Verbinden von Blechteilen (2) zu zumindest einem Blechpaket (3) gezeigt. Um besonders exakte und standfeste Blechpakte zur Verfügung zu stellen, wird vorgeschlagen, dass die Blechteile (2) im Eingangsbereich (18a) der Stapeleinrichtung (17) höchstens bereichsweise miteinander verklebt werden, um ein, insbesondere schüsselartiges, Wölben der Blechteile (2) im Eingangsbereich (18a) zu vermeiden.

## Beschreibung

Die Erfindung betrifft ein Verfahren zum Verbinden von Blechteilen zu zumindest einem Blechpaket, bei dem ein Elektroband oder -blech bereitgestellt wird, das an zumindest einer, insbesondere an beiden, seiner Flachseiten eine, vorzugsweise thermisch aktivierbare, Schmelzklebelackschicht, insbesondere Backlacksicht, aufweist, Blechteile vom Elektroband oder -blech mithilfe eines Stempels und einer Matrize einer Stanzstufe, insbesondere eines Folgeverbundwerkzeugs, vereinzelt und die Blechteile in einen Eingangsbereich eines Schachts einer Stapeleinrichtung eingebracht werden, in welcher Stapeleinrichtung die Blechteile gestapelt sowie in einem diesem Eingangsbereich nachfolgenden Verklebebereich des Schachts der Stapeleinrichtung durch Aktivierung der Schmelzklebelackschicht zum Blechpaket vollflächig verklebt werden.

Um Blechteile zu Blechpaketen zu verkleben, beispielsweise durch ein Klebepaketieren, was ein Stanzen und Paketieren von Blechteilen umfasst, ist es bekannt, diese Blechteile aus einem mit Backlack beschichteten Elektroband oder-blech auszustanzen und durch thermische Aktivierung des Backlacks, der sich als Schmelzklebelackschicht auf einer Flachseite des Elektrobands und sich folglich auch am vereinzelten Blechteil befindet, vollflächig zu verkleben. Hierzu werden die Blechteile mithilfe einer Stanzstufe vereinzelt, welche die vereinzelten Blechteile zudem mithilfe des Stempels in deren Matrize einbringt, die an einen Eingangsbereich einer Stapeleinrichtung anschließt. In dem Eingangsbereich nachfolgenden Verklebebereich der Stapeleinrichtung werden dann die Schmelzklebelackschichten zwischen den Blechteilen aktiviert und damit die Blechteile zu Blechpakten vollflächig verklebt.

Zum Erreichen einer vorgegebenen Maßgenauigkeit am Blechpaket werden die Blechteile oftmals spielfrei zur Wand der Stapeleinrichtung geführt. Dies kann neben jenen sich beim Stanzen ergebenden Eigenspannungen im Blechteil nachteilig zu einer Schüsselung von Blechteilen im Eingangsbereich der Stapeleinrichtung führen. Diese Schüsselung von Blechteilen, welche Wölbung sich prozessabhängig entweder gegen oder in Stapelrichtung ergeben kann, gefährdet unter anderem die Maßgenauigkeit der folgend hergestellten Blechpakete. Hinzu kommt, dass durch das Einbringen der Blechteile in die Stapeleinrichtung auf den Stapel zeitweise ein Druck aufgebracht wird, was zu einem Hin- und Herfedern des Stapels mit geschüsselten Blechteilen samt der Gefahr von Kratzspuren an diesen führen kann. Kratzer können jedoch zu einer verminderten Festigkeit am vollflächig verklebten Blechpaket führen - und zudem auch dessen elektromagnetische Eigenschaft beeinträchtigen.

Die Erfindung hat sich daher die Aufgabe gestellt, ein eingangs geschildetes Verfahren zum Verbinden von Blechteilen zu Blechpaketen derart zu verändern, dass damit Blechpakete exakt und reproduzierbar sowie beschädigungsfrei erzeugt werden können.

Die Erfindung löst die gestellte Aufgabe durch die Merkmale des Anspruchs 1.

Werden die Blechteile im Eingangsbereich der Stapeleinrichtung höchstens bereichsweise miteinander verklebt, kann sichergestellt werden, dass sich die gestapelten Blechteile im Eingangsbereich nicht, insbesondere schüsselartig, wölben -womit also jeweils die ebene Längserstreckung quer im Schacht erhalten bleibt. Selbst eine in der Fläche vergleichsweise kleine stoffschlüssige Verbindung zwischen den Blechteilen im Eingangsbereich der Stapeleinrichtung kann bereits ausreichen, ein aus dem Stand der Technik bekanntes Federn des Stapels oder eine Schüsselung zu verhindern - was dadurch verursachten Beschädigungen an den Blechteilen vorbeugt. Auch die Relativbewegung der aufeinandergestapelten Blechteile zueinander ist derart verringerbar. Somit wird erreicht, dass miteinander verklebte Blechteile in ihrer Lage zueinander stabilisiert werden - was der Qualität der Verbindung bei Verklebung zu einem Blechpaket und auch der Maßgenauigkeit des Blechpakets förderlich ist. Zudem ist der Aufwand des bereichsweisen Verklebens vergleichsweise gering und beeinträchtigt das Verfahren im Ablauf nur unwesentlich. Erfindungsgemäß führt dieses bereichsweise Verkleben zu den Vorteilen eines besonders maßgenauen Blechpakets, dessen beschädigungsfreien Blechteile - im Verklebebereich der Stapeleinrichtung schließlich vollflächig miteinander verklebt- eine besonders hohe Standfestigkeit des Blechpakets gewährleistet.

Vorstehend Genanntes kann weiter verbessert werden, wenn das bereichsweise Verkleben der Blechteile bezüglich ihres Mittelpunkts höchstens im äußeren Drittel und/oder im inneren Drittel ihrer Flachseitenfläche erfolgt.

Vorzugsweise werden die Blechteile punktuell verklebt, um damit beispielsweise die Homogenität der vollflächigen Verklebung zwischen den Blechteilen zu erhalten.

Dieses bereichsweise Verkleben ist beispielsweise dadurch erreichbar, indem für das bereichsweise Verkleben die Schmelzklebelackschicht des Elektrobands oder - blechs oder der Blechteile aktiviert wird. Hierzu eignet sich beispielsweise ein Laser. Vorzugsweise findet diese Aktivierung vor dem Eingangsbereich einer Stapeleinrichtung statt.

Alternativ ist vorstellbar, dass für das bereichsweise Verkleben Klebstoff auf das Elektroband oder -blech oder auf die Blechteile aufgebracht wird.

Es kann vorgesehen sein, vor dem Aufbringen des Klebstoffs die Schmelzklebelackschicht an der für das Aufbringen des Klebstoffs vorgesehenen Stelle am Elektroband oder -blech oder der Blechteile aufgeschmolzen wird. Dies kann der Beständigkeit und der Kraft der Klebeverbindung durch den Klebstoff förderlich sein. Alternativ ist zur Erreichung dieses Vorteils vorstellbar, dass die Schmelzklebelackschicht an dieser Stelle, vorzugsweise zur Gänze, entfernt wird. Für beide genannten Varianten ist die Verwendung eines Lasers vorstellbar, da dieser Verfahrensschritt derart zuverlässig, genau und berührungsfrei erfolgen kann.

Vorzugsweise wird dieser Klebstoff auf die untere Flachseite des Elektrobands oder -blech aufgebracht - etwa, um den Stempel frei von Klebstoffresten zu halten oder, um das Vorsehen von Aussparungen am Stempel zu vermeiden, damit dieser nicht in Kontakt mit dem Klebstoff kommt.

Dabei ist denkbar, dass nach dem Auftragen des Klebstoffs das Elektroband oder - blech zur Stanzstufe hin berührungsfrei geführt wird, um ein Abstreifen des Klebstoffs zu vermeiden.

Die Verschmutzungsgefahr am Stanzwerkzeug oder auch auf der Klebstoffschicht kann weiter vermindert werden, wenn der Klebstoff direkt vor der Stanzstufe aufgebracht wird.

Bei dem Klebstoff kann es sich vorzugsweise um einen Einkomponentenklebstoff handeln. Zudem ist ein Auftragen eines Einkomponentenklebstoffs einfach technologisch handhabbar, was das Verfahren weiter vereinfachen kann.

Bevorzugt ist die Zugfestigkeit der bereichsweisen Verklebung [mPa] > der Torsions-Eigenspannung [mPa] des Blechteils.

Das Verfahren kann weiter vereinfacht werden, wenn die Blechteile in die Matrize eingebracht werden, die an einen Eingangsbereich des Schachts der Stapeleinrichtung anschließt. Vorstellbar ist auch, dass die Matrize Teil des Eingangsbereichs des Schachts ist. Vorzugsweise werden die Blechteile mithilfe des Stempels in die Matrize eingebracht.

In den Figuren ist beispielsweise der Erfindungsgegenstand anhand einer Ausführungsvariante näher dargestellt. Es zeigen
- Fig. 1: eine teilweise aufgerissene Seitenansicht auf eine schematisch dargestellte Vorrichtung zur Durchführung eines Verfahrens zum Verbinden von Blechteilen zu Blechpaketen,
- Fig. 2a: eine vergrößerte Teilansicht der Fig. 1, und zwar auf die Stapeleinrichtung,
- Fig. 2b: eine Ansicht auf Fig. 2a ohne der erfindungsgemäßen bereichsweisen Ver-klebung von Blechteilen in der Stapeleinrichtung und
- Fig. 3: eine Unteransicht auf ein Blechteil im Eingangsbereich der Stapeleinrichtung nach Fig. 2a.

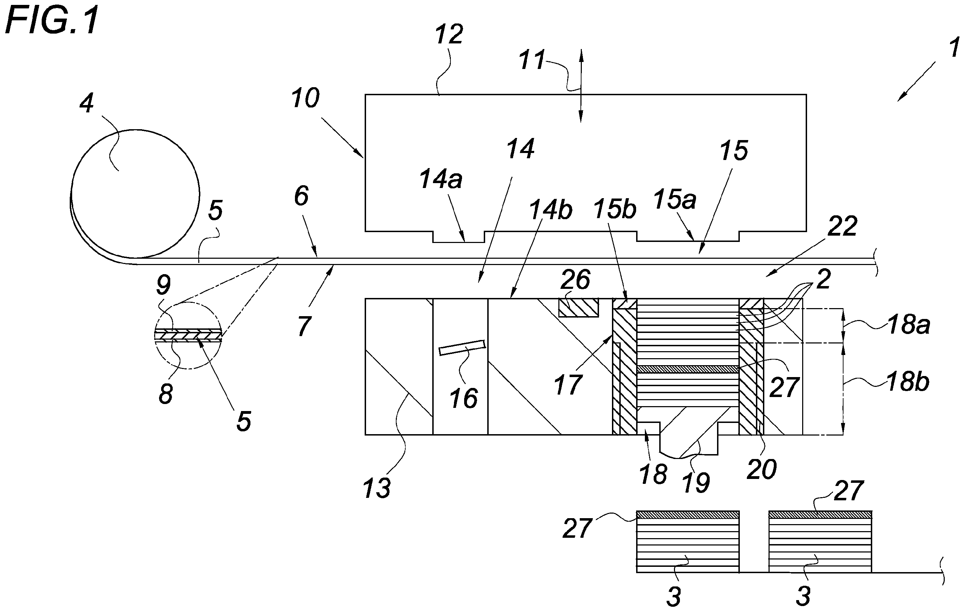

Gemäß dem Ausführungsbeispiel in Fig. 1 wird eine Vorrichtung 1 zur Durchführung des erfindungsgemäßen Verfahrens schematisch dargestellt. Diese Vorrichtung 1 dient dem Paketieren vereinzelter Blechteile 2 zu Blechpaketen 3 für elektrische Maschinen. Hierzu wird von einem Coil 4 ein Elektroband 5 abgehaspelt, welches auf einer seiner Flachseiten 6 oder 7 oder - wie in Fig. 1 dargestellt - auf beiden seiner Flachseiten 6, 7 eine vollflächige, thermisch aktivierbare und damit aushärtbare Schmelzklebelackschicht 8, 9 aus Backlack aufweist. Ein Elektroblech 5 weist typischerweise eine Eisen-Silizium-Legierung.

Im Allgemeinen wird erwähnt, dass solch eine thermisch aktivierbare und damit heißhärtende Schmelzklebelackschicht 8, 9 bzw. Schmelzklebstoffschicht auch unter der Bezeichnung "Backlack" bekannt ist. Beispielsweise kann der Schmelzklebelack eine Epoxidharzbasis aufweisen. Vorzugsweise handelt es sich beim Schmelzklebelack um ein Bisphenol-basiertes Epoxidharz-System mit einem Härter, beispielsweise mit einer Dicyandiamidbasis. Insbesondere kann es sich beim erwähnten Schmelzklebelack um ein Bisphenol-A-Epichlorhydrinharz-System mit Dicyanamid als Härter handeln. Dieses zweistufig aushärtende Epoxidharz-System befindet sich auf dem Elektroband 5 im B-Zustand. Damit ist der teilvernetzte Schmelzklebelack reaktionsfähig. Durch Wärmezufuhr reagiert der sich im B-Zustand befindende Schmelzklebelack weiter und kann damit in den vollvernetzten C-Zustand übergeführt werden - was auch als Verbacken bezeichnet wird. Typischerweise hat diese teilvernetzte Schmelzklebelackschicht 8, 9 eine Dicke von einigen Mikrometern.

Vom backlackbeschichteten Elektroband 5 werden mithilfe eines Stanzwerkzeugs 10, nach Fig. 1 mithilfe eines Folgestanzwerkzeugs bzw. Folgeverbundwerkzeugs, mehrere Blechteile 2 freigestanzt bzw. vereinzelt. Solch ein Freistanzen kann - im Allgemeinen erwähnt - ein Ausschneiden, Abschneiden, Ausklinken, Beschneiden, Zerteilen durch Ausdrücken etc. sein. Es ist aber auch ein Ausdrücken von Blechteilen 2 vorstellbar. Vorzugsweise beträgt die Dicke jedes Blechteils 2 zwischen 0,09 und 0,49 mm (Millimeter) und die Dicke jeder Schmelzklebelackschicht 8, 9 zwischen 2 und 12 µm (Mikrometer).

Wie außerdem der Fig. 1 zu entnehmen, führt das Stanzwerkzeug 10 ein Schneiden mit mehreren Hüben 11 durch, indem sein Oberwerkzeug 12 mit seinem Unterwerkzeug 13 zusammenwirkt. Hierzu weist das Stanzwerkzeug 10 mehrere Stanzstufen 14, 15 auf. Mit einem ersten Stempel 14a der Vorbearbeitungsstanzstufe 14 am Oberwerkzeug 11 wird das Elektroband 5 für ein Freistanzen vorbearbeitet, wonach mit einem zweiten Stempel 15a der zweiten und im Ausführungsbeispiel auch letzten Stanzstufe 15 am Oberwerkzeug 11 aus dem Elektroband 5 Blechteile 2 freigestanzt, also vereinzelt werden. Hierzu wirken die Stempel 14a, 15a mit den jeweiligen Matrizen 14b, 15b der betreffenden Stanzstufen 14, 15 am Unterwerkzeug 13 zusammen. Solch ein Folgeschneiden ist in der Fig. 1 unter anderem daran zu erkennen, dass beim Vorbearbeitungsstanzen ein Teil 16 vom Elektroband 5 abgetrennt wird, um das Elektroband 5 für das Freistanzen der Blechteile 2 vorzubereiten.

Jene, mithilfe der Stanzstufe 15 freigestanzten Blechteile 2 werden durch Druck des Oberwerkzeugs 11 bzw. des Stempels 15a in die Matrize 15b, in weitere Folge in eine an die Matrize 15b anschließende Stapeleinrichtung 17 gedrängt und damit gestapelt. Die Stapeleinrichtung 17 umfasst hierzu einen Schacht 18 und einen beweglichen Gegenhalter 19 im Unterwerkzeug 13, wobei der Schacht 18 auch eine bekannte Paketbremse alternativ oder zusätzlich zum Gegenhalter 19 aufweisen kann.

Der Schacht 18 gliedert sich in einen Eingangsbereich 18a und einen nachfolgenden Verklebebereich 18b. Der Gegenhalter 19 im Unterwerkzeug 13 bremst die Blechteile 2, wodurch diese Blechteile 2 unter Druck des Oberwerkzeugs 11 und mithilfe der zwischen den Blechteilen 2 vorhandenen Schmelzklebelackschichten 8, 9 miteinander eine physikalische und/oder chemische Verbindung eingehen bzw. damit gefügt werden - und zwar durch thermische Aktivierung der Schmelzklebelackschichten 8, 9 zwischen den Blechteilen 2 im Verklebebereich 18b des Schachts 18. Damit werden die Blechteile 2 miteinander vollflächig verklebt. Hierzu werden die Schmelzklebelackschichten 8, 9 auf eine Temperatur im Bereich von 180 °C bis 250 °C gebracht und damit aktiviert.

Dazu wird die Stapeleinrichtung 17 im Verklebebereich 18b aktiv beheizt - die Stapeleinrichtung 17 weist hierzu eine elektrische Heizung 20 auf. Entsprechend der Anordnung der elektrischen Heizung 20 unterteilt sich der Schacht 18 in den Eingangsbereich 18a und den Verklebebereich 18b, wobei die beiden Bereiche verständlicherweise ineinander übergehen.

Außerdem können die Blechpakete 3 zumindest einem nicht dargestellten weiteren Aushärtungsschritt nach dem Verlassen der Stapeleinrichtung 17 unterworfen werden, um die stoffschlüssige Verbindung zwischen den Blechteilen 2 weiter auszuhärten. Des Weiteren besteht die Möglichkeit einer Drehung der Stapeleinrichtung 17, um beispielsweise segmentierte Blechpakete 3 aus Lagen mit mehreren nebeneinander angeordneten und übereinander gestapelten Blechteilen 2 auszubilden - was ebenfalls nicht dargestellt ist.

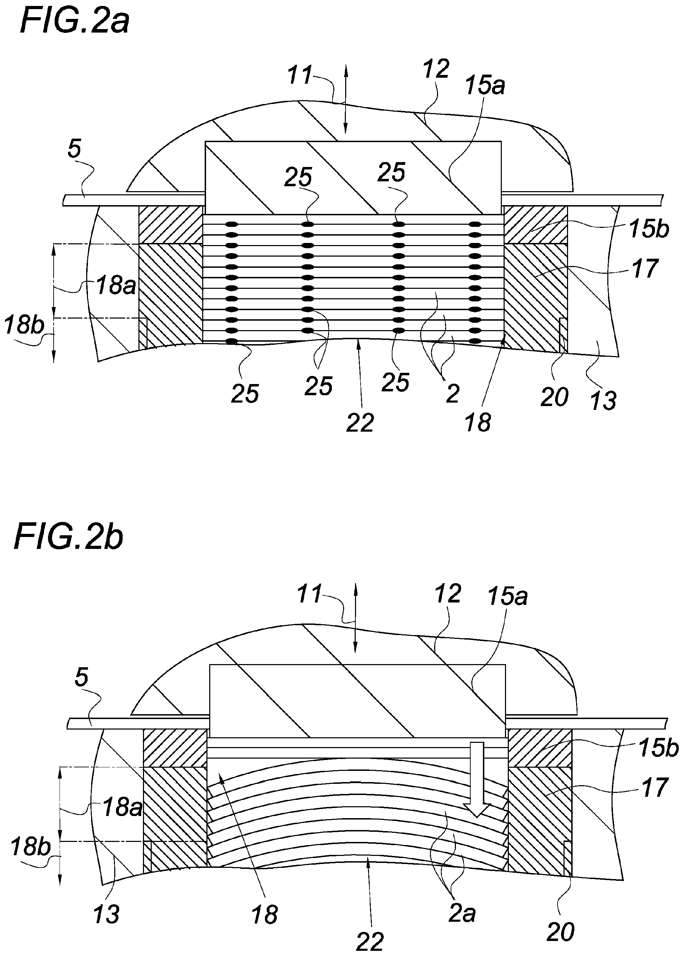

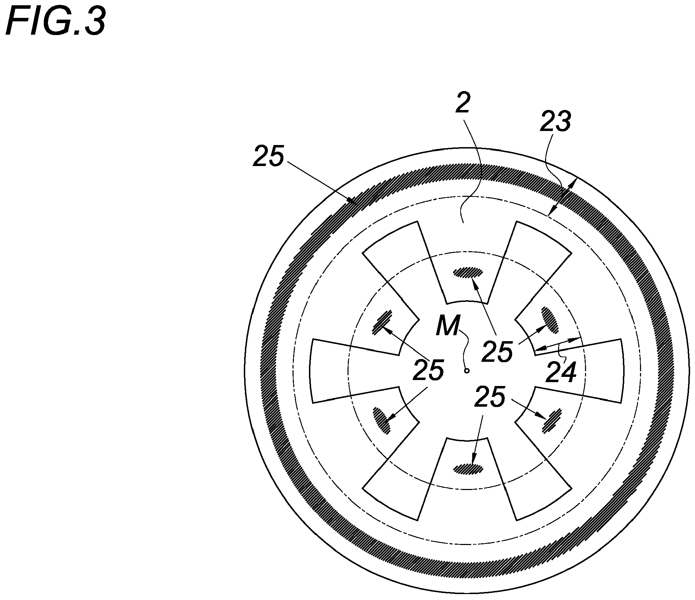

Erfindungsgemäß werden die Blechteile 2 im Eingangsbereich 18a der Stapeleinrichtung 17 höchstens bereichsweise an ihren Flachseitenflächen 21 miteinander verklebt - wie anhand Fig. 2a erkennbar. Die diesbezüglichen Klebestellen sind in Fig. 3 auf der Flachseitenflächen 21 zu erkennen. Dieses bereichsweise Verkleben führt dazu, dass die Blechteile 2 in der Stapeleinrichtung 17 die plane Lage nicht verlassen bzw. sich schüsseln oder wölben, beispielsweise durch Eigenspannungen.

Solch eine nachteilige Schüsselung oder Wölbung ist beispielsweise anhand der Blechteile 2a der Fig. 2b zu entnehmen. In diesem Fall federn auch die gewölbten Blechteile 2a bei Druckbelastung des Stempel 15a auf den Stapel 22 von Blechteilen 2a in der Stapeleinrichtung 17 - was eine Verklebung im Verklebebereich 18b des Schachts 18 erschweren kann. Zudem ist ein formgenaues Blechpaket 3 aufgrund dieser, die plante Erstreckung verlassenden, gewölbten Blechteile 2a nicht zu erwarten.

Die Erfindung mit der bereichsweisen Verklebung vermeidet dies - was das Verfahren besonders reproduzierbar in der Herstellung von fehlerfreien und maßgenauen Blechpaketen 3 macht.

Wie in der Fig. 3 zudem zu entnehmen, sind die Blechteile 2 im äußeren Drittel 23 und inneren Drittel 24 ihrer Flachseitenfläche in Bezug auf deren Mittelpunkt M verklebt. Nach Fig. 3 ist das bereichsweise Verkleben im äußeren Drittel 23 vollständig umlaufend ausgeführt. Das bereichsweise Verkleben im inneren Drittel 24 ist punktuell ausgeführt.

Diese bereichsweise Verklebung kann durch eine Aktivierung der Schmelzklebelackschicht 8, 9 erfolgen, beispielsweise mit einem Laser, wobei auch andere thermische Energie abgebende Mittel denkbar sind.

Handhabungsfreundlicher und schneller kann dieses bereichsweise Verkleben durch Aufbringen eines Klebstoffs 25 auf die Schmelzklebelackschicht 8, 9 des Elektrobands 5 und damit auf die Blechteile 2 erreicht werden. Dieser Einkomponentenklebstoff wird auf die untere Flachseite 7 des Elektrobands 5 aufgetragen, und zwar mithilfe einer Beschichtungseinrichtung 26 mit ihren nicht dargestellten Düsen. Die Beschichtungseinrichtung 26 kann auch einen - nicht dargestellten - Laser umfassen, um vor dem Aufbringen des Klebstoffs die Schmelzklebelackschicht an der für das Aufbringen des Klebstoffs vorgesehenen Stelle am Elektroband oder -blech aufzuschmelzen oder sie zu zur Gänze zu entfernen - dies kann der Qualität und Beständigkeit der Klebeverbindung zwischen den Blechteilen 2 förderlich sein.

Diese Beschichtungseinrichtung 26 ist unmittelbar vor der letzten Stanzstufe 22 angeordnet, und zwar nach dem Ausführungsbeispiel im Unterwerkzeug 13.

Damit der aufgebrachte Klebstoff 25 sich nicht über dem Unterwerkzeug 13 verteilt, wird nach dem Auftragen des Klebstoffs 25 das Elektroband 5 zur Stanzstufe 22 hin berührungsfrei geführt, wie in Fig. 1 zu erkennen.

Zudem ist nach Fig. 1 ein mitgestapeltes Trennelement 27 zu erkennen, welches das Trennen der miteinander vollflächig verklebten bzw. verbackten Blechteile 2 in Blechpakete 3 erleichtert.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Verfahren zum Verbinden von Blechteilen (2) zu zumindest einem Blechpaket (3), bei dem
ein Elektroband (5) oder -blech bereitgestellt wird, das an zumindest einer, insbesondere an beiden, seiner Flachseiten (6, 7) eine, vorzugsweise thermisch aktivierbare, Schmelzklebelackschicht (8, 9), insbesondere Backlacksicht, aufweist, Blechteile (2) vom Elektroband (5) oder -blech mithilfe eines Stempels (15a) und einer Matrize (15b) einer Stanzstufe (15), insbesondere eines Folgeverbundwerkzeugs, vereinzelt und
die Blechteile (2) in einen Eingangsbereich (18a) eines Schachts (18) einer Stapeleinrichtung (17) eingebracht werden, in welcher Stapeleinrichtung (17) die Blechteile (2) gestapelt sowie in einem diesem Eingangsbereich (18a) nachfolgenden Verklebebereich (18b) des Schachts (18) der Stapeleinrichtung (17) durch Aktivierung der Schmelzklebelackschicht (8, 9) zum Blechpaket (3) vollflächig verklebt werden,
**dadurch gekennzeichnet, dass**
die Blechteile (2) im Eingangsbereich (18a) der Stapeleinrichtung (17) höchstens bereichsweise miteinander verklebt werden, um ein, insbesondere schüsselartiges, Wölben der Blechteile (2) im Eingangsbereich (18a) zu vermeiden.

2. Verfahren nach Anspruch 1, **dadurch gekennzeichnet, dass** das bereichsweise Verkleben der Blechteile (2) bezüglich ihres Mittelpunkts (M) höchstens im äußeren Drittel (23) und/oder im inneren Drittel (24) ihrer Flachseitenfläche (21) erfolgt.

3. Verfahren nach Anspruch 1 oder 2, **dadurch gekennzeichnet, dass** das bereichsweise Verkleben der Blechteile (2) punktuell erfolgt.

4. Verfahren nach einem der Ansprüche 1 bis 3, **dadurch gekennzeichnet, dass** für das bereichsweise Verkleben die Schmelzklebelackschicht (8, 9) des Elektrobands (5) oder -blechs oder der Blechteile (2), insbesondere durch einen Laser, aktiviert wird.

5. Verfahren nach einem der Ansprüche 1 bis 4, **dadurch gekennzeichnet, dass** für das bereichsweise Verkleben Klebstoff (25) auf das Elektroband (5) oder -blech oder auf die Blechteile (2) aufgebracht wird.

6. Verfahren nach Anspruch 5, **dadurch gekennzeichnet, dass** vor dem Aufbringen des Klebstoffs (25) die Schmelzklebelackschicht (8, 9) an der für das Aufbringen des Klebstoffs (25) vorgesehenen Stelle am Elektroband (5) oder -blech oder der Blechteile (2), insbesondere mithilfe eines Lasers, aufgeschmolzen oder, insbesondere zur Gänze, entfernt wird.

7. Verfahren nach Anspruch 5 oder 6, **dadurch gekennzeichnet, dass** der Klebstoff (25) auf die untere Flachseite (7) des Elektrobands (5) oder -blechs aufgebracht wird.

8. Verfahren nach Anspruch 7, **dadurch gekennzeichnet, dass** nach dem Auftragen des Klebstoffs (25) das Elektroband (5) oder -blech zur Stanzstufe hin berührungsfrei geführt wird.

9. Verfahren nach einem der Ansprüche 5 bis 8, **dadurch gekennzeichnet, dass** der Klebstoff (25) direkt vor der Stanzstufe aufgebracht wird.

10. Verfahren nach einem der Ansprüche 5 bis 9, **dadurch gekennzeichnet, dass** der Klebstoff (25) ein Einkomponentenklebstoff ist.

11. Verfahren nach einem der Ansprüche 1 bis 10, **dadurch gekennzeichnet, dass** die Zugfestigkeit der bereichsweisen Verklebung [mPa] > der Torsions-Eigenspannung [mPa] des Blechteils (2) ist.

12. Verfahren nach einem der Ansprüche 1 bis 11, **dadurch gekennzeichnet, dass** die Blechteile (2), insbesondere mithilfe des Stempels (15a), in die Matrize (15b) eingebracht werden, die an einen Eingangsbereich (18a) des Schachts (18) der Stapeleinrichtung (17) anschließt oder die Teil des Eingangsbereichs (18a) des Schachts (18) ist.
